# EUROPEAN PATENT APPLICATION

(11) **EP 3 182 562 A1**
(43) Date of publication of application: **21.06.2017**
(21) Application number: 15199945.5
(22) Date of filing: 14.12.2015
(51) Int. Cl.: H02K 9/28, H02K 13/00

(54) **A SLIP RING ARRANGEMENT FOR AN ELECTRIC MACHINE**

(71) Applicant: General Electric Technology GmbH, 5400 Baden (CH)
(72) Inventor: Chen, Zhiyun, 5033 Buchs (CH); Hediger, Daniel, 5504 Othmarsingen (CH)
(74) Representative: General Electric Technology GmbH

(57) **Abstract**

The present disclosure relates to a slip ring arrangement for an electric machine to transfer current from a current source to a rotor of an electric machine. It is an object of the invention to provide a slip ring arrangement for an electric machine which guarantees appropriate cooling properties and mechanical stability. Disclosed is a slip ring arrangement for an electric machine with a slip ring composed of a cylindrical body, an end section and a shrink seat, whereas in the cylindrical body radial openings are formed, the shrink seat is shrinkable on a shaft, the shaft has a reduced diameter under the cylindrical body in order to form a sloped annular air gap beneath the cylindrical body to direct cooling medium through the radial openings.

## Description

### TECHNICAL FIELD

The present disclosure relates to a slip ring arrangement for an electric machine to transfer current from a current source to a rotor of an electric machine.

The electric machine is in particular a rotating electric machine such as a synchronous generator to be connected with a gas or a steam turbine or a synchronous generator to be connected to a hydro turbine (hydro generator) or an asynchronous generator or a synchronous or asynchronous electric motor or also other types of electric machines.

### BACKGROUND

Electric machines are excited with an electric excitation current to generate the necessary magnetic field in the winding coils. In specific configurations the excitation current is supplied to the winding coils or windings of the rotor of the electric machine, then referred to as rotor current. In general, rotor current generated outside the machine is transferred by a set of brushes to the rotor windings. The current flowing in the stationary brushes is transferred to the rotor winding via two rings shrunk onto the rotational shaft. This ring is commonly denominated as slip ring in this technical field. At high power applications in power generation the slip ring is heated due to friction and current flow between the brushes and the slip rings. Mostly, the slip rings are forced cooled by a fan either directly mounted on the shaft or externally connected. The state of the art also describes helical grooves along the whole axial length of the slip ring. However, the state of the art solution can increase the deformation of the slip ring surface in long term operation compared to a massive slip ring without cuts. The state of art solution requires an additional radial fan as well as sufficient cooling surface which implies a large outer diameter of the slip ring.

### SUMMARY

It is an object of the invention to provide a slip ring arrangement for an electric machine which guarantees appropriate cooling properties and mechanical stability. This object is solved with the features according to the independent claim 1.

Further examples of the invention are described in the dependent claims.

In an example of the invention, the radial openings join grooves formed at the outer side of the slip ring to form a passage for the cooling medium through the grooves and the radial openings. These grooves can also be designed as helical grooves.

In another example of the invention the radial openings have a rounded rectangular cross-section with the longer side of the rectangle in the tangential direction. The round shape of the edges of the radial openings reduce the mechanical stress. Moreover, the flow resistance of the cooling medium is reduced. Further, the length of the opening in the tangential direction is smaller than 40mm. This feature ensures that the surface deformation of the slip ring during operation can be kept in allowable tolerances. Avoiding surface deformation of the slip ring means also to minimize vibrations of the brush laying at the slip ring in operation.

In another example of the invention the openings in the slip ring are distributed homogenously along the cylinder of the slip ring. By this means the temperature difference at the contact surface of the brush to the slip ring is minimized. In addition, the mechanical deformation of the slip ring at the common rotation speed is strongly reduced which contributes to lower vibrations of the brush.

In a further example of the invention the radial openings are formed in the slip ring by an erosion technique. This erosion technique was found to be advantageous against a common milling especially in combination of the openings with the grooves in the slip ring.

### BRIEF DESCRIPTION OF THE DRAWINGS

Further characteristics and advantages will be more apparent from the description of a preferred but non-exclusive embodiment of the slip ring arrangement, illustrated by way of non-limiting example in the accompanying drawings, in which:

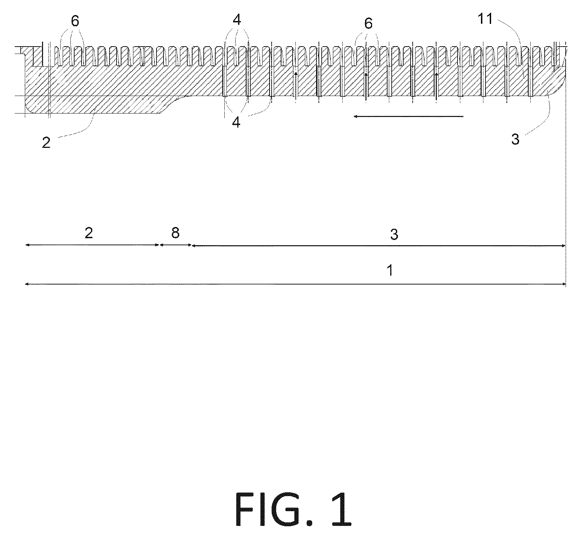

- Fig. 1: shows a cross-section of a side view of a part of a slip ring arrangement with a shrink seat at the left side and a cylindrical body hanging over a sloped annular air gap at the right side, with several radial openings formed in the slip ring for passage of a cooling medium, and the sloped annular air gap under the slip ring to establish the slip ring arrangement as an example of the invention, with grooves formed on the upper side of a slip ring and some radial openings connected to the grooves to join the grooves such that the grooves together with the openings form the passage for the cooling medium;
- Fig. 2: shows a partly cross-section of a slip ring arrangement similar to Fig. 1 which is shrunk on a shaft support of a rotor shaft with the reduced diameter by the sloped annular air gap below the slip ring, and an uncut view below the rotor shaft;
- Fig. 3: shows a perspective view of a slip ring according to an example of the invention with homogenously formed openings in the slip ring with rounded rectangular cross-sections.

### DETAILED DESCRIPTION OF EXEMPLARY EMBODIMENTS

With reference to the figures, these show cross-sections of the longitudinal side of slip ring arrangements and a slip ring, wherein like reference numerals designate identical or corresponding parts throughout the several views.

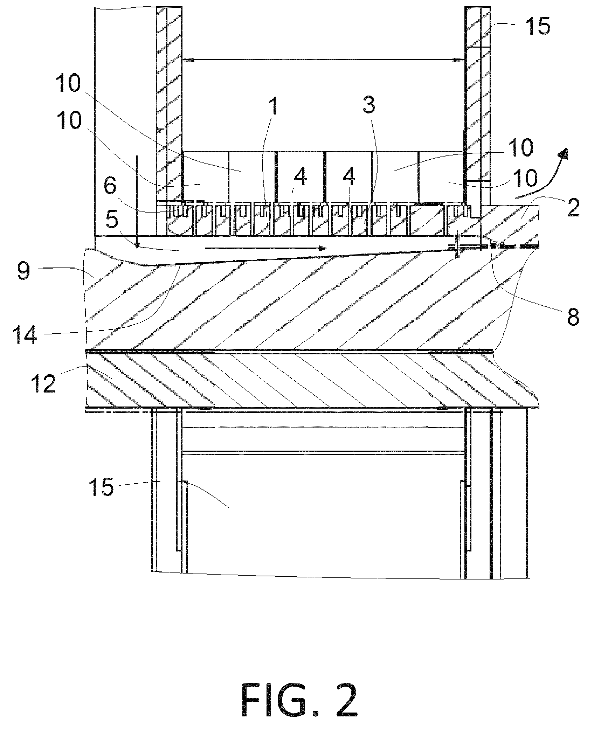

Fig. 1 shows a cross-section of a side view of a part of a slip ring arrangement 1 according to an example of the invention. According to this disclosure the slip ring arrangement 1 is defined as a slip ring 11 with a sloped annular air gap 5. The slip ring 11 contains a cylindrical body 3, a shrink seat 3 and an end section 8 in between, fabricated in one-piece. The slip ring 11 is massive and fabricated from metal or a similar conductive material. The shrink seat 2 is connected to a shaft 12 of the rotor by means of a shaft support 9. At the upper part of the slip ring 11 brushes 10 to transfer current to the rotor winding adjoin the slip ring 1. Shown is a longitudinal part of a cross-section according to the longitudinal axis of a rotor. At the left side the shrink seat 2 is designed which is shrunk at the lower face onto the shaft 12 of a rotor of an electric machine to establish a secure connection. Between the shaft 12 and the shrink seat 2 the shaft support 9 is fixed to both parts. This left side is also the inner end of the slip ring 1. At the right side of Fig. 1 a part of the slip ring 1 is shown which is not directly connected to the shaft support 9. This part is referred here as cylindrical body 3 of the slip ring 1. The cylindrical body 3 has a smaller breadth and a bigger length than the shrink seat 2, as can be seen in Fig. 1. Between the shrink seat 2 and the cylindrical body 3 of the slip ring arrangement 1 a second part of the slip ring arrangement 1 is arranged in one-piece with the cylindrical body 3, referred to as end section 8 of the slip ring 11, as the end section 8 forms the end of the parts which transfer currents. The end section 8 has the same diameter as the shrink seat 2 at the joint face and a decreasing diameter in the direction of the cylindrical body 3. At the joint face with the cylindrical body 3 the end section 8 has the same diameter as the cylindrical body 3. Below the cylindrical body 3 a free space is designed for passage of a cooling medium, e.g. air. The cooling medium is moved by means of self-ventilation due to the rotation of the rotor without a ventilator (not shown). This passage is referred to as sloped annular air gap 5. The cooling medium cools the slip ring 11 in operation. The flow direction of the cooling medium is illustrated by the arrows in Fig. 1. In this perspective the cooling medium enters the slip ring 11 from the right into the sloped annular air gap 5, as illustrated under Fig. 2. The cooling medium passes openings 4 formed in the slip ring 11 and thereby cools down the slip ring 11 in operation. The openings 4 project through the slip ring 11 in a vertical direction, i.e. perpendicular to the rotor axis or rotor shaft 12. This means the openings 4 are radially formed in the slip ring 11, referred to as radial openings 4. The openings 4 have a rectangular cross-section with rounded edges, in Fig. 1 the narrow side of the rectangle is shown, the longer side of the rectangle is directed into the image plane. However, the openings 4 can have any other shape, round, eclipse, etc. In this example the radial openings 4 are formed in the slip ring 11 with an erosion technique. The radial openings 4 are homogeneously distributed in the slip ring 11. This measure results in high mechanical stability of the slip ring 11 with openings 4. The cooling medium passes the openings 4 and cools down the slip ring 11. The flow of cooling medium is illustrated by arrows in the openings 4. The slip ring 11 has grooves 6 formed on the upper face of the slip ring 11 which project by a specific extent through the massive slip ring 11. The grooves 6 are formed into the slip ring 11 from the outer surface and form blind holes. The grooves 6 serve for cooling of the slip ring 11 and have also the function to guide the carbon dust as abrasion from the brushes 10 above the slip ring 11. The space or annular air gap 5 below the cylindrical body 3 of the slip ring 11 is sloped, it has a decreasing cross-section in the direction of the flow of the cooling medium from the outer to the inner side of the slip ring 11. The slip ring 11 is mounted to the shrink seat 2 with the end section 8 connecting the shrink seat 2 with the cylindrical body 3 of the slip ring 11 in a secure manner in one-piece. The diameter of the shaft 12 reduces towards the end of the cylindrical body 3 or cylindrical ring, which forms a slope annular air gap 5 underneath the cylindrical body 3. The sloped annular air gap 5 underneath the cylindrical body 3 further contributes to the homogeneous flow distribution through the radial openings 4 to grooves 6 which further optimizes the cooling effort.

In this example at each second groove 6 an opening 4 is formed in the slip ring 11 and forms a common passage with the groove 6 through the whole slip ring 11 in the vertical direction. The passage of cooling medium is hereby designed as combination of the grooves 6 with the openings 4. However, the openings 4 can be formed independently from the grooves 6 to create a duct for the cooling medium through the whole breadth of the slip ring 11. The manufacturing of the slip ring arrangement 1 with connected openings 4 is simplified with an erosion technique which is commonly not used in this technical field. The erosion technique enables a high precision moulding of the openings 4. At the upper side of the slip ring 11 the cooling medium is discharged from the slip ring arrangement 1 and the rotor to the outside via an exhaust at the left from the slip ring 11 of Fig. 1. As an exhaust for the cooling medium a channel (not shown) is arranged between two adjacent slip ring arrangements 11. A further ventilator can be arranged at the exit to further support the drain of the cooling medium heated in the slip ring 11. The invention allows a significant reduction of the temperature in the slip ring 11. This contributes to a stable running behaviour of the shaft 12 of the rotor.

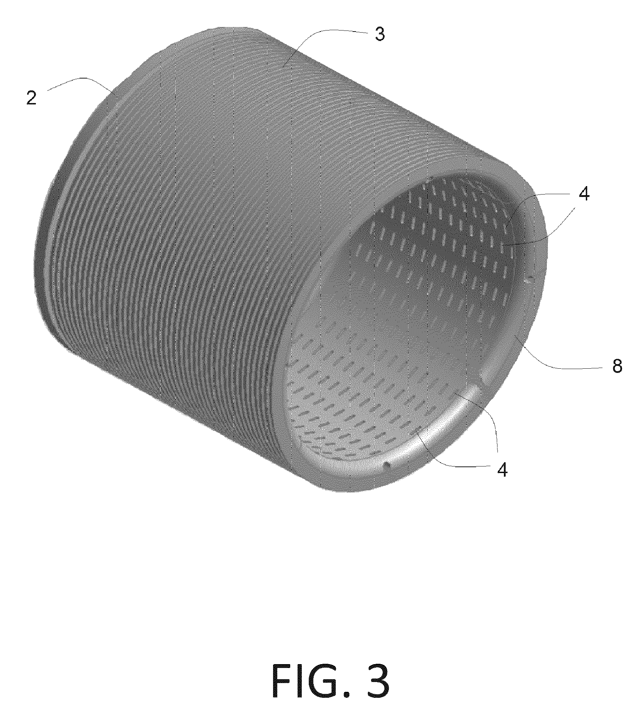

Fig. 2 shows a partly cross-section of a slip ring arrangement 1 similar to Fig. 1 incorporated at the rotor shaft 12. The upper half is shown in a cut view, the lower half is shown uncut. The cut slip ring 11 with grooves 6, openings 4, and sloped annular air gap 5 in the shaft support 9 is mounted to the shaft 12. Above the slip ring arrangement 1, shown is the upper half, overall twelve brushes 10 adjoin the slip ring 1 to transfer current to the slip ring 11 in operation of the electric machine. Here, six brushes 10 are shown, six further brushes 10 adjoin the slip ring 1 at the other side. The brushes 10 are housed in a brush gear housing 15 which is shown partly in a cut manner. The passage of the cooling medium is illustrated by arrows, the cooling medium enters the sloped annular air gap 5 from above, flows along the sloped annular air gap 5 and through the combined grooves 6 and openings 4. After passing the combined grooves 6 and openings 4 from the sloped annular air gap 5 to the brushes 10 the cooling medium escapes from the slip ring 1 in the direction of the bended arrow at the right through an exhaust channel. The cooling of the slip ring 11 takes place along the whole cylindrical body 3 of the slip ring 11. For sake of illustration a perspective view of the slip ring 11 without the shrink seat 2 according to an example of the invention is shown in Fig. 3 in an isolated manner. In Fig. 3 the cylindrical body 3 in the middle with rounded rectangular openings 4 can be seen and the end sections 2 at both ends of the cylinder. The openings 4 have a bigger extend in the tangential direction than in the axial direction, the longer side of the rectangle is in the tangential direction. The length of each opening 4 in the tangential direction is smaller than 40mm. These dimensions of the openings 4 have been proven to provide an efficient cooling result. With the presence of the radial openings 4, a radial fan mounted on the shaft according to the state of the art is optional. A radial fan can be applied to further enforce the cooling of the slip ring 11.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 1: slip ring arrangement
- 2: shrink seat
- 3: cylindrical body
- 4: radial openings or openings
- 5: sloped annular air gap or annular air gap
- 6: groove
- 7: cooling supply
- 8: end section
- 9: shaft support
- 10: brush
- 11: slip ring
- 12: rotor shaft
- 14: slot edge
- 15: brush gear housing

## Claims

1. A slip ring arrangement (1) for an electric machine with a slip ring (11) composed of a cylindrical body (3), an end section (8) and a shrink seat (2), whereas in the cylindrical body (3) radial openings (4) are formed, the shrink seat (2) is shrinkable on a shaft (12), the shaft (12) has a reduced diameter under the cylindrical body (3) in order to form a sloped annular air gap (5) beneath the cylindrical body (3) to direct cooling medium through the radial openings (4).

2. The slip ring arrangement (1) according to claim 1, **characterized in that** grooves (6) are formed at the outer side of the slip ring (11) and the radial openings (4) join some or all of the grooves (6).

3. The slip ring arrangement (1) according to claim 1, **characterized in that** the radial openings (4) are formed in the slip ring (11) by an erosion technique.

4. The slip ring arrangement (1) according to claim 1, **characterized in that** the radial openings (4) have a rounded rectangular cross-section with the longer side of the rectangle in the tangential direction.

5. The slip ring arrangement (1) according to claim 1, **characterized in that** the length of one radial opening (4) in the tangential direction is smaller than 40mm.

6. The slip ring arrangement (1) according to claim 1, **characterized in that** the radial openings (4) in the slip ring (11) are distributed homogenously along the cylinder of the slip ring (11).
